(19) **Europäisches Patentamt**
European Patent Office
Office européen des brevets

(11) **EP 1 785 462 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(51) Int Cl.:
*C09J 11/04* *(2006.01)*

(21) Anmeldenummer: **07004122.3**

(22) Anmeldetag: **17.05.2000**

(54) **Lösbare Klebeverbindungen**

Soluble adhesive joints

Assemblages collés amovibles

(84) Benannte Vertragsstaaten:
**AT BE CH CY DE DK ES FI FR GB GR IE IT LI LU MC NL PT SE**

(30) Priorität: **26.05.1999 DE 19924138**

(43) Veröffentlichungstag der Anmeldung:
**16.05.2007 Patentblatt 2007/20**

(62) Dokumentnummer(n) der früheren Anmeldung(en) nach Art. 76 EPÜ:
**00935047.1 / 1 190 009**

(73) Patentinhaber: **Henkel AG & Co. KGaA**
**40589 Düsseldorf (DE)**

(72) Erfinder:
- **Christophliemk, Peter**
**40595 Düsseldorf (DE)**
- **Kirsten, Christian**
**51399 Burscheid (DE)**

- **Nonninger, Ralph**
**66129 Saarbrücken-Bübingen (DE)**
- **Schirra, Hermann**
**66111 Saarbrücken (DE)**
- **Schmidt, Helmut**
**66130 Saarbrücken (DE)**

(56) Entgegenhaltungen:
**EP-A1- 1 151 051    DE-A1- 3 709 852**

- **KRYSZEWSKI M ET AL: "NANOSTRUCTURED CONDUCTING POLYMER COMPOSITES - SUPERPARAMAGNETIC PARTICLES IN CONDUCTING POLYMERS" SYNTHETIC METALS, ELSEVIER SEQUOIA, LAUSANNE, CH, Bd. 94, Nr. 1, 1998, Seiten 99-104, XP000934280 ISSN: 0379-6779**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft thermoplastische Klebstoffzusammensetzungen, deren Bindemittelsystem nanoskalige Teilchen mit superparamagnetischen Eigenschaften enthält. Ein weiterer Gegenstand der vorliegenden Erfindung sind lösbare Klebeverbindungen.

In vielen Industriezweigen, insbesondere in der metallverarbeitenden Industrie wie z.B. der Fahrzeugindustrie, im Nutzfahrzeugbau sowie deren Zulieferindustrien oder auch bei der Herstellung von Maschinen und Haushaltsgeräten oder auch in der Bauindustrie werden zunehmend gleiche oder verschiedene metallische und nicht-metallische Substrate klebend bzw. abdichtend miteinander verbunden. Diese Art des Fügens von Bauteilen ersetzt in zunehmenden Maße die klassischen Fügeverfahren wie Nieten, Schrauben oder Schweißen, weil das Kleben/Abdichten eine Vielzahl von technologischen Vorteilen bietet. Im Gegensatz zu den traditionellen Fügeverfahren wie Schweißen, Nieten, Schrauben ist das Lösen und Separieren von geklebten Bauteilen bisher noch nicht befriedigend gelöst.

Die EP-A-735121 beschreibt einen Klebfolien-Abschnitt für eine rückstandsfreie und beschädigungslose und wieder lösbare Verklebung bestehend aus einer doppelseitig klebenden Klebefolie mit einem aus der Klebefolie herausragenden Anfasser, an dem durch Ziehen in Richtung der Verklebungsebene die Verklebung lösbar ist. Dieses Verfahren ist jedoch nur anwendbar, wenn die Klebstoffschicht der Klebefolie ein Haftklebstoff ist. Mit derartigen Klebeverbindungen lassen sich jedoch nur geringe Zug- bzw. Schälfestigkeiten erreichen, so daß dieses Verfahren nur zum Fixieren von kleinen Gegenständen wie Haken und dergleichen im Haushaltsbereich anwendbar ist.

Die DE-A-4230116 beschreibt eine Klebstoffzusammensetzung enthaltend eine Abmischung eines aliphatischen Polyols mit einem aromatischen Dianhydrid. Diese Klebstoffzusammensetzung ermöglicht ein Auflösen der Verklebung in wäßrig alkalischen Systemen, konkret genannt werden Sodalösungen oder Alkalilaugen. Es wird vorgeschlagen diese wäßrig alkalisch löslichen Klebstoffe zur rationellen Herstellung von Magnetteilen und anderen Kleinteilen zu verwenden, wobei der Klebstoff nur zur Herstellung von Hilfsklebungen bei der Materialbearbeitung verwendet werden soll. Sehr ähnliche Klebstoffe sind auch als Etikettierklebstoffe bekannt, die ein Ablösen der Etiketten im wäßrigen oder wäßrig alkalischen Milieu bei Getränkeflaschen und ähnlichen Gebinden erlauben.

Die DE-A-4328108 beschreibt einen Kleber für Bodenbeläge und ein Verfahren zum Lösen dieser verklebten Bodenbeläge mit Hilfe von Mikrowellenenergie. Dazu soll der Kleber elektrisch leitfähig sein und durch ein Mikrowellengerät erweichbar sein. Konkret vorgeschlagen werden lösungsmittelfreie Kontaktkleber auf Basis von (wäßrigen) Polymerdispersionen, die Kupferpulver oder Aluminiumpulver enthalten. Gemäß der Lehre dieser Schrift sollen die verklebten Bodenbelagsstücke zum Lösen der Klebeverbindung in ein Mikrowellengerät gelegt werden, damit die Klebeschicht erweicht werden kann, so daß man die Bodenbelagsstücke nach dem Erweichen der Kleberschicht manuell abziehen kann.

Die WO 94/12582 beschreibt einen Haftkleber auf der Basis einer Mischung aus einer wäßrigen Polymerdispersion und einem in einem organischen Lösungsmittel gelösten Klebstoff sowie Klebrigmachern und Verdickungsmitteln. Dieser Haftklebstoff hat in einem breiten Temperaturbereich eine konstante Klebkraft und ermöglicht das mechanische Trennen der Klebeverbindungen. Angegeben wird, daß sich diese Klebeverbindungen zum Verkleben von Dämm- und/oder Zierflächenteilen wie z.B. Dämm-Materialien oder Kunststoff-Folien eignet.

Die DE-A-19526351 beschreibt ein Lösegel für Lacke, Farben und Kleber auf der Basis organischer Lösungsmittel unter Zusatz von Netz- Verdickungs- und anderen üblichen Mitteln. Als konkretes Anwendungsfeld werden die Verwendung als Abbeizmittel bei der Entschichtung von 2 K-Lacken genannt. Obwohl erwähnt wird, daß derartige Mischungen auch zum Einsatz bei 2 K-Klebern geeignet sei, fehlen jedwede konkreten Angaben zum Lösen derartiger Klebeverbindungen. In ähnlicher Weise beschreibt die WO 87/01724 eine Zusammensetzung zur Entfernung von ausgehärteten Polysulfiddichtstoffen oder Beschichtungen. Hierbei werden in einem Lösungsmittel oder Lösungsmittelgemisch bestehend aus Dimethylformamid oder Dimethylacetamid oder deren Mischung mit aromatischen Lösungsmitteln wie Toluol oder Xylol ein Alkalimetall- oder Amoniumthiolat auf der Basis von Alkyl- oder Phenylthiolaten gelöst und auf ausgehärtete Polysulfiddichtstoffe oder Beschichtungsmaterialien aufgetragen, um diese anschließend von ihren Substraten, wie z. B. Flugzeugtanks entfernen zu können. Angaben zum Lösen von Klebeverbindungen werden nicht gemacht.

In der Arbeit "Reversible Crosslinking in Epoxy Resins", Journal of Applied Polymer Science, 39, 1439 bis 1457 (1990) beschreiben V.R. Sastri und G.C. Tesoro Epoxyharze mit verschiedenen Epoxyäquivalenten, die mit 4,4'-Dithioanilin vernetzt sind. Dort wird vorgeschlagen, das vernetzte Harz zu 600 $\mu$m großen Teilchen zu malen. Dieses feingemahlene Pulver wird dann in einer Lösung aus Diglyme, Salzsäure und Tributylphosphin unter Rückfluß gekocht, bis das gemahlene Harz aufgelöst ist. Analoge Offenbarungen werden in der US-A-4,882,399 von den gleichen Autoren gemacht. Konkrete Angaben über lösbare Klebeverbindungen fehlen in beiden Dokumenten.

Die WO 99/07774 beschreibt Klebstoffe, bei denen zumindest eine Aufbaukomponente Di- oder Polysulfidbindungen enthält und die nach dem Aushärten durch Auftragen von Lösungen von Spaltungsagenzien auf der Basis von Mercaptoverbindungen wieder gelöst werden können. Dadurch wird es möglich, verklebte Bauteile auf chemischem Wege in der Klebfuge wieder zu trennen. Gemäß der Lehre dieser Schrift kann das Spaltungsagenz auch in einer bei Raumtemperatur inerten Form der Klebstoff-Formulierung zugemischt werden, wobei die Spaltung nach Aktivierung des Reagenzes bei erhöhter Temperatur erfolgen kann. Konkrete Ausbildungen dieser inerten Form des Spaltungsagenzes werden nicht genannt. Obwohl die Verwendung von lösungsmittelhaltigen Spaltungsagenzien es erlaubt, Klebeverbindungen wieder zu lösen, ist es wünschenswert, auf lösungsmittelhaltige Spaltungsagenzien verzichten zu können, da diese Vorgehensweise

* wegen der diffusionsbedingten Einwirkungszeit der Spaltungsagenzien sehr zeitraubend ist
* die Handhabung von lösungsmittelhaltigen Spaltungsagenzien aus Umweltschutzgründen vermieden werden sollte.

Die DE-A-35 01 490 beschreibt eine in den Rahmen einer Autokarosserie eingeklebte Glasscheibe unter Verwendung eines elastomeren vernetzten Klebers. Diese Scheibe hat auf ihrer Oberfläche im Klebebereich einen mit Stromanschlüssen versehenen Leitstreifen, der auf seiner dem Kleber zugewandten Seite eine Trennschicht aus einem thermisch schmelzbaren Material wie Weichlot oder Thermoplast trägt. Zum Lösen der Klebeverbindung wird der Leitstreifen unter Strom gesetzt, er erwärmt sich, die Trennschicht schmilzt und die Scheibe läßt sich von der Karosserie lösen.

Die EP-A-0521825 beschreibt eine lösbare Klebeverbindung, bei welche die miteinander verbundenen Teile mittels einer dazwischen eingebrachten Kleberaupe gefügt sind. Diese Kleberaupe enthält ein flächiges thermoplastisches Trennelement. Dieses thermoplastische Trennelement enthält intrinsisch leitfähige Polymere, elektrisch leitfähige Ruße, Graphit, Metallpulver, Metallfasern oder Metallnadeln, metallbeschichtete Füllstoffe, metallbeschichtete Mikroglaskugeln, metallbeschichtete Textilfasern oder Gemische dieser Materialien. Beim Erwärmen der Klebeverbindung durch Strom oder Strahlungszufuhr wird diese thermoplastische Trennschicht erweicht, so daß die miteinander verbundenen Anteile mechanisch voneinander getrennt werden können. Konkret schlägt die EP-A-521825 vor, derartige lösbare Klebeverbindungen bei der Direktverglasung im Fahrzeugbau einzusetzen.

Angesichts dieses Standes der Technik haben sich die Erfinder die Aufgabe gestellt, Klebstoffe bereitzustellen, die ein möglichst effizientes Lösen von Klebeverbindungen ermöglichen sollte. Nach dem Verkleben der entsprechenden Substrate mit diesen Klebstoffen sollte die Verklebung durch Anlegen elektromagnetischer Wechselfelder zum Lösen der Klebeverbindung erwärmt werden können.

Die Lösung der Aufgabe ist den Patentansprüchen 1-5 zu entnehmen. Sie beruht im wesentlichen in der Bereitstellung von thermoplastischen Klebstoff-Zusammensetzungen, deren Bindemittel 1 bis 30 Gew.% oder 3-20 Gew.% nanoskalige Teilchen mit superparamagnetischen Eigenschaften enthalten.

Ein weiterer Gegenstand der vorliegenden Erfindung sind lösbare Klebeverbindungen, bei denen die kraftschlüssige Verbindung der miteinander verbundenen Teile durch mindestens eine zwischen den Teilen eingebrachte Klebstoffschicht bewirkt wird, wobei die Klebstoffmatrix dieser Klebstoffschicht nanoskalige Teilchen enthält, die keine Hysterese aufweisen.

Die Gegenstände der vorliegenden Erfindung ermöglichen Verfahren zum Lösen von Klebeverbindungen mit Hilfe von elektrischen, magnetischen oder elektromagnetischen Wechselfeldern, wobei die Klebstoffschicht nanoskalige Teilchen enthält, die keine Hysterese aufweisen und unter Einfluß dieser Wechselfelder die Klebstoffschicht erwärmen. Diese Erwärmung der Klebstoffschicht dient dem Trennen der Klebeverbunde. Dabei dienen die nanoskaligen Teilchen als Füllstoffe mit "Signalempfänger"-Eigenschaft, so daß Energie in Form von elektromagnetischen Wechselfeldern gezielt in den Klebeverbund eingetragen wird. Durch den Energieeintrag in den Klebstoff kommt es zu einer lokalen starken Temperaturerhöhung, wodurch ein reversibles Lösen des Klebeverbundes ermöglicht wird. Im Falle nicht-reaktiver, thermoplastischer Klebstoffsysteme bewirkt dieser Energieeintrag ein Schmelzen des Klebstoffpolymers, im Falle reaktiver, d. h. vernetzter duroplastischer Klebstoffsysteme führt die Temperaturerhöhung zu einem thermischen Abbau des Polymeren und somit zu einem Bruch in der Klebefuge. In diesem Sinne sind besonders solche Klebstoffe zu bevorzugen, die entweder selbst thermisch labil sind, oder deren Polymerrückrat einzelne thermisch labile Gruppen aufweist. Auch die Modifizierung von Klebstoffen mit thermisch labilen Additiven, die infolge einer Temperaturerhöhung aktiviert werden können und so ein Klebeversagen initiieren, läßt sich erfolgreich für die erfindungsgemäßen lösbaren Klebeverbindungen verwenden. Gegenüber den herkömmlichen Erwärmungsmethoden sind nunmehr Verfahren zum Lösen von Klebeverbindungen zugänglich, bei denen die Wärmeerzeugung lokal definiert in der Klebefuge geschieht, so daß eine thermische Belastung der verklebten Substratmaterialien selbst vermieden bzw. minimiert wird. Das Verfahren ist sehr zeitsparend und effektiv, da die Wärme nicht durch Diffusionsvorgänge durch die verklebten Substrate hindurch in die Klebefuge eingebracht werden muß. Dieses Verfahren reduziert auch in erheblichem Maße Wärmeverluste durch Wärmeableitung bzw. Wärmestrahlung über das Substrat und ist somit besonders ökonomisch.

Zur Energieeintragung eignen sich insbesondere magnetische Wechselfelder. Bei der Verwendung von magnetischen Wechselfeldern eignen sich superparamagnetische Stoffe, insbesondere die Metalle Aluminium, Kobalt, Eisen, Nickel oder deren Legierungen sowie Metalloxide vom Typ n-Maghemit ($\gamma$-$Fe_2O_3$), n-Magnetit ($Fe_3O_4$), Ferrite von der allgemeinen Formel $MeFe_2O_4$, wobei Me für zweiwertige Metalle aus der Gruppe Kupfer, Zink, Kobalt, Nickel, Magnesium, Calcium oder Cadmium steht.

Bei der Verwendung magnetischer Wechselfelder eignen sich insbesondere nanoskalige superparamagnetische Teilchen, sogenannte "single-domain-particle". Im Vergleich zu den vom Stand der Technik bekannten paramagnetischen Partikeln zeichnen sich die nanoskaligen Füllstoffe dadurch aus, daß solche Materialien keine Hysterese aufweisen. Dies hat zur Folge, daß die Energiedissipation nicht durch magnetische Hystereseverluste hervorgerufen wird, sondern die Wärmeerzeugung vielmehr auf eine während der Einwirkung eines elektromagnetischen Wechselfeldes induzierte Schwingung oder Rotation der Teilchen in der umgebenden Matrix und somit letztlich auf mechanische Reibungsverluste zurückzuführen ist. Dies führt zu einer besonders effektiven Erwärmungsrate der Teilchen und der sie umgebenden Matrix.

"Nanoskalige Teilchen" im Sinne der vorliegenden Erfindung sind dabei Teilchen mit einer durchschnittlichen Teilchengröße (bzw. einem durchschnittlichen Teilchendurchmesser) von nicht mehr als 100 nm, vorzugsweise nicht mehr als 50 nm und insbesondere nicht mehr als 30 nm. Vorzugsweise weisen die erfindungsgemäß einzusetzenden nanoskaligen Teilchen eine mittlere Teilchengröße im Bereich von 1 bis 40 nm, besonders bevorzugt zwischen 3 und 30 nm auf. Für die Ausnutzung der Effekte durch Superparamagnetismus sollen die Teilchengrößen nicht mehr als 30 nm betragen. Die Teilchengröße wird dabei bevorzugt nach der UPA-Methode (Ultrafine Particle Analyzer) bestimmt, z. B. nach dem Laser-Streulicht-Verfahren ("laser light back scattering"). Um eine Agglomeration oder ein Zusammenwachsen der nanoskaligen Teilchen zu verhindern oder zu vermeiden, sind diese üblicherweise oberflächenmodifiziert bzw. oberflächenbeschichtet. Ein derartiges Verfahren zur Herstellung agglomeratfreier nanoskaliger Teilchen ist am Beispiel von Eisenoxidteilchen in der DE-A-196 14 136 in den Spalten 8 bis 10 angegeben. Einige Möglichkeiten zur oberflächlichen Beschichtung derartiger nanoskaliger Teilchen zur Vermeidung einer Agglomeration sind in der DE-A-197 26 282 angegeben.

Als Bindemittelmatrix für die erfindungsgemäßen Klebstoffe können im Prinzip alle für Klebstoffe geeignete thermoplastischen Polymere eingesetzt werden. Beispielhaft erwähnt seien für die thermoplastisch erweichbaren Klebstoffe die Schmelzklebstoffe auf der Basis von Ethylen-Vinylacetatcopolymeren, Polybutene, Styrol-Isopren-Styrol bzw. Styrol-Butadien-Styrolcopolymere, thermoplastische Elastomere, amorphe Polyolefine, lineare, thermoplastische Polyurethane, Copolyester, Polyamidharze, Polyamid/EVA-Copolymere, Polyaminoamide auf Basis von Dimerfettsäuren, Polyesteramide oder Polyetheramide.

Als Energie zur Erwärmung der nanoskalige Teilchen enthaltenden Klebstoffe eignet sich prinzipiell jedes höherfrequente elektromagnetische Wechselfeld: so lassen sich beispielsweise elektromagnetische Strahlungen der sog. ISM-Bereiche (industrial, scientific and medical application) einsetzen, nähere Angaben hierzu finden sich unter anderem bei Kirk-Othmer, "Encyclopedia of Chemical Technology", 3. Auflage, Band 15, Kapitel "Microwave technology".

Es war bereits weiter oben darauf hinwiesen worden, daß bei der Verwendung von nanoskaligen Teilchen im Sinne dieser Erfindung die elektromagnetische Strahlung in besonders effektiver Weise ausgenutzt werden kann. Dies zeigt sich besonders deutlich daran, daß bereits im sehr niederfrequenten Bereich von etwa 50 kHz oder 100 kHz bis hinauf zu 100 MHz nahezu jede Frequenz verwendet werden kann, um eine zur Spaltung der Klebeverbindungsmatrix notwendige Wärmemenge in der Klebstoffmatrix zu erzeugen. Die Auswahl der Frequenz kann sich dabei nach den zur Verfügung stehenden Geräten richten, wobei selbstverständlich dafür Sorge getragen werden muß, daß Störfelder nicht abgestrahlt werden.

Nachfolgend soll die Erfindung anhand einiger Prinzipversuche dargestellt werden, wobei die Auswahl der Beispiele keine Beschränkungen des Umfanges des Erfindungsgegenstandes darstellen soll, sie zeigen nur in modellhafter Weise die Wirkungsweise der erfindungsgemäßen Klebstoffzusammensetzungen.

**Beispiele**

Beispiel 1

Oberflächenmodifiziertes n-Maghemit mit einer mittleren Teilchengröße von 50 nm, (die Messung der Teilchengröße erfolgte nach der UPA-Methode, "Ultrafine Particle Analyzer" oder "laser light back scattering") wurde in HDPE (high density polyethylene) eingearbeitet.

In gleicher Weise wurde oberflächenmodifiziertes Magnetit in HDPE eingearbeitet.

Bei einem Gehalt von 15 Gew.% Magnetit bzw. n-Maghemit konnte eine Probe derartig modifizierten HDPE durch Einwirkung eines magnetischen Wechselfeldes von 300 kHz innerhalb von 3 min auf 150°C erwärmt werden. Bei einem Füllgrad von 5 Gew.% nanoskaliger Teilchen wurden 8 min für die Erwärmung auf 150°C benötigt. D. h., innerhalb kurzer Zeit wurde das HDPE durch Einwirkung eines magnetischen Wechselfeldes deutlich über den Erweichungspunkt des HDPE erwärmt, so daß mit HDPE verbundene Substrate mit geringer Krafteinwirkung getrennt werden können.

Die weiteren Untersuchungen wurden überwiegend auf der Basis dreier kommerziell von der HENKEL KGaA erhältlicher thermoplastischer Schmelzklebstoffe durchgeführt. Hierbei handelte es sich um einen normalen Ethylenvinylacetat-basierten Klebstoff (Technomelt Q 3118, EVA1), und zwei Polyamid-basierte Klebstoffe mit mittlerer (Macromelt 6208, PA1), bzw. hoher (modifiziertes Polyamid PA2) Wärmebeständigkeit. Eine Auswahl charakteristischer Klebe- bzw. Werkstoffeigenschaften der unmodifizierten Klebstoffe sind der Tabelle 1 zu entnehmen.

Tabelle 1

| Beispiel | Klebstoff | WSF [°C] | ZSF (Holz/Holz) [MPa] | ZSF (PVC/PVC) [MPa] |
|---|---|---|---|---|
| 2 | EVA1 | 53 | 2,40 | 2,25 |
| 3 | PA1 | 124 | 2,92 | 3,41 |
| 4 | PA2 | 153 | 6,67 | 3,86 |

Zur Bestimmung der Wärmestandfestigkeit (WSF) der Verklebungen wurden zwei mit einem Loch versehene Probekörper aus Buchenholz bzw. PVC mit den Maßen 100 x 25 x 4 mm auf einer Fläche von 20 x 25 mm mit dem Klebstoff verklebt und etwa 24 h bei Raumtemperatur gelagert. Die verklebten Probekörper wurden anschließend in einem Umlufttrockenschrank (Heraeus UT 5050 EK) aufgehängt und mit einem Gewicht von 1365 g belastet. Hierauf wurde folgendes Temperaturprogramm durchlaufen:

1. Start bei 25°C,

2. in 10 min von 25°C auf 50°C aufheizen,

3. über 5 h von 50°C auf 200°C aufheizen,

4. 20 min bei 200°C halten und

5. innerhalb 20 min auf 25°C abkühlen.

Mittels eines Mikroprogrammgebers (DEP 1131) wurde die Zeit in Sekunden angezeigt, in der die Verklebung reißt. Die WSF wurde nach der Formel berechnet:

$$\text{WSF [°C]} = [((\text{gemessene Zeit in sec}) - 600) / 120] + 50.$$

Die Zugscherfestigkeit (ZSF) wurde in Anlehnung an die DIN 53283 bestimmt. Dabei wurden Probekörper aus Buchenholz bzw. PVC mit den Maßen 100 x 25 x 4 mm auf einer Fläche von 20 x 25 mm mit den Klebstoffen verklebt und nach etwa 24 Stunden im Zugversuch (Zwick Universalprüfmaschine 144501) untersucht.

Die vorstehend beschriebenen Klebstoffe wurden mit unterschiedlichen Gehalten an nanoskaligem Magnetit modifiziert. Der verwendete Magnetit wurde dabei zum Teil zur besseren Anpassung an die polymere Klebstoffmatrix oberflächenmodifiziert. Die in der Tabelle 2 angegebenen Teilchengrößen wurden mittels UPA-Messungen (UPA=Ultra Fine Particle Analyser) bestimmt. Die Kristallitgrößen der Magnetite wurden mittels Röntgenstrukturanalyse mit 8 nm bestimmt.

Tabelle 2

| Bezeichnung | Modifizierung | Mittlere Teilchengröße |
|---|---|---|
| MA | Keine | 50 nm |
| MA-MPTS | Methacrylgruppen | 50 nm |
| MA-AEA | Epoxydgruppen | 50 nm |

Die in Tabelle 2 aufgeführten Magnetite wurden in unterschiedlichen Füllgraden in die in Tabelle 1 beschriebenen Klebstoffe eindispergiert. Die Eigenschaften einiger ausgewählter mit 20 Gew-% modifizierter Formulierungen sind in der Tabelle 3 zusammengefaßt.

Tabelle 3

| Beispiel | Klebstoff/Füllstoff | WSF [°C] | ZSF (Holz/Holz) [MPa] | ZSF (PVC/PVC) [MPa] |
|---|---|---|---|---|
| 5 | EVA1 + 20% MA | 51 | 3,55 | 2,98 |
| 6 | PA1 + 20% MA-MPTS | 132 | 3,33 | 3,53 |
| 7 | PA2 + 20% MA | 169 | 4,88 | 2,29 |
| 8 | PA2 + 20% MA-MPTS | 169 | 3,86 | 2,51 |
| 9 | PA2 + 20% MA-AEA | 169 | 4,37 | 1,74 |

Aus den vorstehenden Beispielen 5 bis 9 wird deutlich, daß selbst bei hoch mit nanoskaligem Magnetit gefülltem Klebstoff die Wärmestandfestigkeit sowie die Zugscherfestigkeit in der Regel nicht negativ beeinflußt wird, dies gilt insbesondere dann, wenn die Magnetitteilchen mit dem zur Klebstoffmatrix passenden Oberflächenmodifizierungsmittel modifiziert wurden.

Einfluß der "Signalempfänger"-Partikelgröße auf die induktive Erwärmbarkeit modifizierter Klebstoffe:

Grundsätzlich eigenen sich zur induktiven Erwärmung polymerer Matrizes neben nano-skaligen "Signalempfängern" auch solche größerer Partikelgröße. Aufgrund eines an dieser Stelle nicht näherer zu beschreibenden anderen Aufwärmmechanismus ist jedoch die eintragbare Energiemenge bei der Verwendung nanoskaliger Füllstoffe erheblich größer als bei der Verwendung größerer Partikel. Dies wird durch entsprechende Untersuchungen, die beispielhaft an einem modifizierten Polyester-System (Dynacoll 7360, Fa. Hüls) durchgeführt wurden, deutlich. Zur Erzeugung des benötigten magnetischen Wechselfeldes wurde ein Gerät der Fa. Hüttinger (TIG 5/300) verwendet. Die angelegte Spannung betrug 180V. Die verwendete Spule wies einen Durchmesser von 3,5 cm und 10 Windungen auf. Die verwendete Spule war dabei Bestandteil des schwingungserzeugenden Schwingkreises. Bei den angegebenen Spannungen und Dimensionen der Spule ergab sich eine Frequenz von etwa 250 kHz. Aus dem Beispiel 10 und dem nicht erfindungsgemäßen Vergleichsbeispiel wird deutlich, daß bei der erfindungsgemäßen Verwendung von nanoskaligen Füllstoffen als "Signalempfänger" in der Klebstoffmatrix die Erwärmung des modifizierten Polyesters in sehr viel kürzerer Zeit zu sehr viel höheren Temperaturen erfolgt als bei den "gröberen" MagnetitTeilchen. Die Ergebnisse der Untersuchungen sind in der Tabelle 4 zusammengefaßt.

Tabelle 4

| Zeit [sek] | Beispiel 10 Nano-Magnetit | Vergleich Sub-$\mu$-Magnetit |
|---|---|---|
| 0 | 20,4 | 18 |
| 5 | 25,9 | 20,3 |
| 10 | 34,7 | 24,1 |
| 15 | 41,2 | 27,5 |
| 20 | 46 | 30,9 |
| 25 | 48,1 | 35,1 |
| 30 | 49,9 | 38,3 |
| 35 | 50,7 | 41,1 |
| 40 | 52,4 | 43,4 |
| 45 | 62,6 | 45,2 |
| 50 | 75,1 | 46,9 |

(fortgesetzt)

| Zeit [sek] | Beispiel 10 Nano-Magnetit | Vergleich Sub-μ-Magnetit |
|---|---|---|
| 55 | 85 | 47,9 |
| 60 | 93,5 | 48,7 |
| 70 | 108 | 50,5 |
| 80 | 118 | 52,4 |
| 90 | 124,9 | 66,2 |
| 100 |  | 82 |

Einfluß des "Signalempfänger"-Füllgrades auf die induktive Erwärmbarkeit modifizierter Klebstoffe:

Das Aufwärmverhalten modifizierter Klebstoffe im magnetischen Wechselfeld ist stark von dem Füllgrad des verwendeten Signalempfängers abhängig. Entsprechende Untersuchungen wurden am Beispiel des Magnetit-modifizierten EVA1 durchgeführt. Zur Erzeugung des benötigten magnetischen Wechselfeldes wurde ein Gerät der Fa. Hüttinger (TIG 5/300) verwendet. Die angelegte Spannung betrug 180V. Die verwendete Spule wies einen Durchmesser von 3,5cm und 10 Windungen auf. Die Ergebnisse der Untersuchungen sind in der Tabelle 5 zusammengefaßt.

Tabelle 5

| Beispiel | Füllgrad n-Magnetit [Gew.%] | Zeit bis zum Erreichen des Schmelzpunktes (80°C) [s] |
|---|---|---|
| 11 | 5 | 89 |
| 12 | 10 | 42 |
| 13 | 15 | 27 |
| 14 | 20 | 20 |

Aus den Beispielen 11 bis 14 wird deutlich, daß mit steigendem Füllgrad an nanoskaligem Magnetit die notwendige Aufheizzeit unter sonst gleichen Bedingungen drastisch verkürzt wird.

Einfluß der Stärke des magnetischen Wechselfeldes auf die induktive Erwärmbarkeit modifizierter Klebstoffe:

Bei der induktiven Erwärmung Magnetit-modifizierter Klebstoffe spielt die Stärke des applizierten Magnetfeldes eine entscheidende Rolle. Hierbei ist die resultierende Stärke des Feldes innerhalb der Spule u.a. von der angelegten Spannung bzw. dem fließenden Strom abhängig. Es wurden Untersuchungen zum Einfluß unterschiedlicher Spannungen mit einem Gerät der Fa. Hüttiger (TIG 5/300) durchgeführt. Die maximal anzulegende Spannung betrug 180V. Die verwendete Spule hatte einen Durchmesser von 3,5 cm und wies 10 Windungen auf. Als Klebstoff wurde die Zusammensetzung gemäß Beispiel 8 verwendet. Die Ergebnisse sind in der Tabelle 6 zusammengefaßt.

Tabelle 6

| Zeit [s] | Erwärmungstemperatur [°C] bei U = [V] | | | | | | | | | |
|---|---|---|---|---|---|---|---|---|---|---|
|  | 18V | 36V | 54V | 72V | 90V | 108V | 126V | 144V | 162V | 180V |
| 0 | 23,8 | 23,3 | 24,1 | 24,7 | 24 | 22,7 | 25,1 | 25,7 | 21,6 | 22,3 |
| 20 | 23,9 | 23,3 | 26,6 | 29 | 35,1 | 36,5 | 47 | 54,7 | 52,5 | 65 |
| 40 | 23,7 | 24 | 29,6 | 34,5 | 45 | 50,2 | 64,6 | 79,3 | 78,5 | 98,7 |
| 60 | 24,1 | 24,9 | 32,7 | 39,1 | 53,3 | 61 | 80,6 | 98,5 | 99,8 | 121 |
| 80 | 24,8 | 25,7 | 35,1 | 44,4 | 60,3 | 71 | 95 | 114 | 118,1 | 140,6 |
| 100 | 24,6 | 26,3 | 37,6 | 48,8 | 68,5 | 81 | 106 | 126 | 134,6 | 155,5 |
| 120 | 25,3 | 26,5 | 39,9 | 52,2 | 75 | 88 | 116 | 140 |  | 170 |

(fortgesetzt)

| Zeit [s] | Erwärmungstemperatur [°C] bei U = [V] | | | | | | | | | |
|---|---|---|---|---|---|---|---|---|---|---|
| | **18V** | **36V** | **54V** | **72V** | **90V** | **108V** | **126V** | **144V** | **162V** | **180V** |
| 140 | 25,1 | 27,4 | 42,1 | 56 | 80,5 | 97 | 125 | 148 | | 178 |
| 160 | 25,8 | 28 | 44,4 | 58,8 | 85,6 | 102,8 | 133,6 | 155 | | 191 |
| 180 | 25,7 | 28,1 | 46 | 62 | 91 | 109 | 140 | 159 | | 198 |

Aus den Meßwerten der Tabelle 6 wird deutlich, daß mit wachsender Feldstärke (d. h. mit wachsender angelegter Spannung) die Geschwindigkeit der Erwärmung der Klebstoffmatrix stark zunimmt, so daß in sehr kurzer Zeit Temperaturen erreicht werden, die ausreichen, um eine derartige Verklebung zu lösen.

Einfluß der Spulengeometrie auf die induktive Erwärmbarkeit modifizierter Klebstoffe:

Außer von der angelegten Spannung ist die Feldstärke des magnetischen Wechselfeldes auch von der Länge bzw. Windungsanzahl der verwendeten Spule abhängig. Je nach Spulenlänge bzw. Windungsanzahl resultiert bei konstanter Spannung ein Feld unterschiedlicher Frequenz bzw. Stärke. Entsprechende Untersuchungen wurden bei konstant maximaler Spannung von 180V durchgeführt. Als Klebstoffbasis diente der mit 20 Gew-% Magnetit modifizierte PA2. Die verwendeten Spulen wiesen einen konstanten Durchmesser von 3,5 cm auf und unterschieden sich in der Windungsanzahl. Die Ergebnisse dieser Untersuchungen sind in Tabelle 7 zusammengefaßt.

Tabelle 7

| t [s] | T [°C] Spule mit 10 Windungen | T[°C] Spule mit 4 Windungen |
|---|---|---|
| 0 | 22,3 | 21,2 |
| 10 | | 95 |
| 20 | 65 | 137 |
| 30 | | 162 |
| 40 | 99 | 179 |
| 50 | | 198 |
| 60 | 121 | 215 |
| 70 | | 226 |
| 80 | 140 | |
| 100 | 155 | |
| 120 | 170 | |
| 140 | 178 | |
| 160 | 191 | |
| 180 | 198 | |
| 200 | -- | |
| 220 | | |
| 240 | | |

Die in Tabelle 7 zusammengefaßten Ergebnisse zeigen, daß bei geringerer Spulenlänge bzw. Windungsanzahl und daraus resultierender höherer Feldstärke die Aufheizrate bei gleicher Klebstoffzusammensetzung signifikant ansteigt.

Zur Klärung, inwiefern die induktive Erwärmung zu einer Veränderung der Klebstoffeigenschaften führt, wurden Versuche vorgenommen, bei denen ein mit 20 Gew-% Magnetit modifizierter PA2 mehrmals induktiv erwärmt wurde.

Für die Untersuchungen wurde wiederum ein Gerät der Fa. Hüttinger (TIG 5/300) verwendet. Die angelegte Spannung betrug 180V. Die verwendete Spule wies einen Durchmesser von 3,5cm und 10 Windungen auf. Zusammenfassend läßt sich feststellen, daß das Aufwärmverhalten des modifizierten Klebstoffs auch nach mehrmaliger Erwärmung im magnetischen Wechselfeld nahezu unbeeinflußt blieb.

Bei thermoplastischen Klebstoffen läßt sich also die Erwärmung und damit die Verklebung der Substrate reversibel gestalten, so daß die verklebten Teile mehrfach gelöst und wieder zusammengefügt werden können, falls dies erforderlich ist.

Entklebung von verklebten Substraten im magnetischen Wechselfeld

Mit modifizierten Klebstoffen, wie sie in der Tabelle 3 beschriebenen sind, wurden Holz/Holz- und PVC/PVC-Verbunde hergestellt. Hierzu wurde der Klebstoff einseitig aufgebracht, das zweite Substrat unter leichtem Druck aufgebracht und der Klebeverbund anschließend 48 Stunden bei Raumtemperatur ruhen gelassen. Anschließend wurden die Klebeverbunde unter einer Zug-Scher-Krafteinwirkung von 0,2 MPa bzw. 0,6 MPa in ein magnetisches Wechselfeld eingehängt und die Zeit bis zum Zerreißen der Probe gemessen. Als Feldgenerator diente ein Gerät der Fa. Hüttinger mit der Typbezeichnung TIG 5/300. Die angelegte Spannung betrug 100% der maximal mit dem verwendeten Gerät möglichen Leistung (180V), die verwendete Spule wies 4 Windungen auf. In Tabelle 8 sind die Ergebnisse zusammengefaßt.

Tabelle 8

| Beispiel | Klebstoff | Abrißzeit [min:sec] | | |
|---|---|---|---|---|
| | | Holz/Holz F=0,2 MPa | Holz/Holz F=0,6 MPa | PVC/PVC F=0,2 MPa |
| 15 | EVA1 + 20 Gew.% Magnetit | 0:08 | - | 0:06 |
| 16 | PA1 + 20 Gew.% MA-MPTS | 0:37 | 0:17 | 1:10 |
| 17 | PA2 + 20 Gew.% MA | 1:01 | 0:44 | 1:04 |
| 18 | PA2 + 20 Gew.% MA-MPTS | 2:33 | 0:57 | 1:02 |
| 19 | PA2 + 20 Gew.% MA-AEA | 1:27 | - | - |

Die in Tabelle 8 zusammengefaßten Versuchsergebnisse zeigen, daß selbst hochfeste Verklebungen, wie die mit dem Schmelzklebstoff PA 2 bei Einwirkung eines magnetischen Wechselfeldes und mäßiger Krafteinwirkung in sehr kurzer Zeit wieder lösbar sind.

**Patentansprüche**

1. Thermoplastische Klebstoffzusammensetzung enthaltend 1 bis 30 Gew.-% an nanoskaligen Teilchen mit superparamagnetischen Eigenschaften bezogen auf die Gesamtzusammensetzung.

2. Zusammensetzung nach Anspruch 1, **dadurch gekennzeichnet, daß** die nanoskaligen Teilchen eine durchschnittliche Teilchengröße von kleiner oder gleich 100 nm, vorzugsweise kleiner/gleich 50 nm und besonders bevorzugt kleiner/gleich 30 nm haben.

3. Zusammensetzung nach Anspruch 1 oder 2, **dadurch gekennzeichnet, daß** die nanoskaligen Teilchen aus superparamagnetischen Stoffen ausgewählt werden aus Aluminium, Cobalt, Eisen, Nickel oder deren Legierungen, Metalloxiden vom Typ des n-Maghemits ($\gamma$-$Fe_2O_3$), n-Magnetits ($Fe_3O_4$) oder der Ferrite vom Typ des $MeFe_2O_4$, wobei Me ein zweiwertiges Metall ausgewählt aus Mangan, Kupfer, Zink, Cobalt, Nickel, Magnesium, Calcium, Cadmium ist.

4. Zusammensetzung nach einem oder mehreren der vorherigen Ansprüche, **dadurch gekennzeichnet, daß** die nanoskaligen Stoffe in einer Menge von 3 bis 20 Gew.% bezogen auf die Gesamtzusammensetzung enthalten sind

5. Mittels elektrischer, magnetischer oder elektromagnetischer Wechselfelder lösbare thermoplastische Klebeverbindung, bei der die kraftschlüssige Verbindung der miteinander verbundenen Teile mit mindestens einer zwischen den Teilen eingebrachten thermoplastischen Klebstoffschicht bewirkt wird, **dadurch gekennzeichnet, daß** die Klebstoffmatrix 1 bis 30 Gew.-% an nanoskaligen Teilchen mit superparamagnetischen Eigenschaften bezogen auf die Gesamtzusammensetzung enthält.

**Claims**

1. Thermoplastic adhesive composition containing 1 to 30% by weight, based on the overall composition, of nanoscale particles having superparamagnetic properties.

2. Composition according to Claim 1, **characterized in that** the nanoscale particles have an average particle size of less than or equal to 100 nm, preferably less than or equal to 50 nm, and particularly preferably less than or equal to 30 nm.

3. Composition according to Claim 1 or 2, **characterized in that** the nanoscale particles made of superparamagnetic substances are selected from aluminum, cobalt, iron, nickel, or alloys thereof, metal oxides of the n-maghemite ($\gamma$-$Fe_2O_3$) type or n-magnetite ($Fe_3O_4$) type, or ferrites of the $MeFe_2O_4$ type, where Me is a divalent metal selected from manganese, copper, zinc, cobalt, nickel, magnesium, calcium, or cadmium.

4. Composition according to one or more of the preceding claims, **characterized in that** the nanoscale substances are contained in a quantity of 3 to 20% by weight, based on the overall composition.

5. Thermoplastic adhesive bond which is detachable by means of alternating electric, magnetic, or electromagnetic fields, in which bond the positive-fit connection of the bonded-together parts is effected using at least one thermoplastic adhesive layer which is introduced between the parts, **characterized in that** the adhesive matrix contains 1 to 30 % by weight, based on the overall composition, of nanoscale particles having superparamagnetic properties.

**Revendications**

1. Composition d'adhésif thermoplastique comprenant 1 à 30% en poids de nanoparticules ayant des propriétés super-paramagnétiques sur la base de la composition totale.

2. Composition selon la revendication 1, **caractérisée en ce que** les nanoparticules ont une taille moyenne inférieure ou égale à 100 nm, de préférence inférieure ou égale à 50 nm et de manière particulièrement préférée inférieure ou égale à 30 nm.

3. Composition selon la revendication 1 ou 2, **caractérisée en ce que** les nanoparticules constituées de substances super-paramagnétiques sont choisies parmi l'aluminium, le cobalt, le fer, le nickel ou leurs alliages, les oxydes métalliques du type n-maghémite ($\gamma$-$Fe_2O_3$), n-magnétite ($Fe_3O_4$) ou les ferrites du type de $MeFe_2O_4$, Me étant un métal divalent choisi parmi le manganèse, le cuivre, le zinc, le cobalt, le nickel, le magnésium, le calcium, le cadmium.

4. Composition selon l'une ou plusieurs des revendications précédentes, **caractérisée en ce que** les nano-substances sont contenues dans une quantité de 3 à 20% en poids sur la base de la composition totale.

5. Liaison adhésive thermoplastique libérable au moyen de champs alternatifs électriques, magnétiques ou électromagnétiques, la liaison par engagement de forces des pièces reliées entre elles étant réalisées à l'aide d'au moins une couche d'adhésif thermoplastique introduites entre les pièces, **caractérisée en ce que** la matrice d'adhésif contient de 1 à 30% en poids de nanoparticules ayant des propriétés super-paramagnétiques sur la base de la composition totale.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 735121 A
- DE 4230116 A
- DE 4328108 A
- WO 9412582 A
- DE 19526351 A
- WO 8701724 A
- US 4882399 A
- WO 9907774 A
- DE 3501490 A
- EP 0521825 A
- EP 521825 A
- DE 19614136 A
- DE 19726282 A

**In der Beschreibung aufgeführte Nicht-Patentliteratur**

- **V.R. SASTRI ; G.C. TESORO.** Reversible Crosslinking in Epoxy Resins. *Journal of Applied Polymer Science,* 1990, vol. 39, 1439-1457
- Microwave technology. **KIRK-OTHMER.** Encyclopedia of Chemical Technology. vol. 15